(19) Europäisches Patentamt / European Patent Office / Office européen des brevets

(11) **EP 3 472 932 B1**

(12) **EUROPEAN PATENT SPECIFICATION**

(45) Date of publication and mention
of the grant of the patent:
**27.11.2019 Bulletin 2019/48**

(21) Application number: **17729162.2**

(22) Date of filing: **14.06.2017**

(51) Int Cl.:
*H02P 25/18* (2006.01)     *H02P 9/00* (2006.01)
*H02P 9/14* (2006.01)     *H02P 9/44* (2006.01)

(86) International application number:
**PCT/EP2017/064610**

(87) International publication number:
**WO 2017/216259 (21.12.2017 Gazette 2017/51)**

(54) **A METHOD FOR CONTROLLING AN ELECTRIC POWER SYSTEM AND AN ELECTRIC POWER SYSTEM**

VERFAHREN ZUR STEUERUNG EINES STROMSYSTEMS UND STROMSYSTEM

SYSTÈME D'ALIMENTATION ÉLECTRIQUE ET PROCÉDÉ DE COMMANDE CORRESPONDANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.06.2016 EP 16174883**

(43) Date of publication of application:
**24.04.2019 Bulletin 2019/17**

(73) Proprietor: **ABB Schweiz AG
5400 Baden (CH)**

(72) Inventors:
• **WESTERLUND, Jan
00380 Helsinki (FI)**
• **POHJALAINEN, Janne
00380 Helsinki (FI)**
• **JANHUNEN, Tuomas
00380 Helsinki (FI)**

(74) Representative: **Kolster Oy Ab
(Salmisaarenaukio 1)
P.O. Box 204
00181 Helsinki (FI)**

(56) References cited:
**WO-A1-02/25802     CH-A- 331 342
DE-A1- 3 432 129     DE-A1- 19 628 223
US-A- 3 737 760**

**Description**

FIELD

The invention relates to a method for controlling an electric power system and to an electric power system.

BACKGROUND

Three phase AC (Alternating Current) induction motors have often in the past been provided with the possibility to connect the stator winding between a Star Y connection and a Delta Δ connection in order to reduce the starting current of the induction motor. The induction motor is started with the stator winding connected into a Star Y connection which is then changed to a Delta Δ connection when the induction motor has reached a rotational speed which is near the asynchronous rotational speed. The starting current of the induction motor is reduced by approximately 30% in the Star Y connection compared to the Delta Δ connection. The starting torque of the induction motor is naturally also reduced by 30% in the Star Y connection. This means that the induction motor can be started in the Star Y connection only if the required starting torque of the induction motor is small enough so that the induction motor can accelerate to a rotational speed near the asynchronous rotational speed before the Star Y connection of the stator winding is changed into the Delta Δ connection.

Three phase AC generators on the other hand have traditionally been operated either in a Star Y connection or in a Delta Δ connection. There has not been any need to change the connection of the stator winding during operation of the three phase AC generator. This is due to the fact that such three phase AC generators have normally been producing electric power to a three phase AC grid. The three phase AC generators have been operated with a constant rotational speed in order to keep the frequency of the three phase AC grid constant. Three phase AC grids have been the predominant solution in electrical power distribution for more than 100 years.

The situation is, however, changing slowly and there is a tendency to replace three phase AC grids with DC grids at least in some applications. There is a tendency to provide vessels having modern electric propulsion units with DC grids instead of traditional three phase AC grids. The use of an onboard DC grid in a vessel makes it possible to increase the efficiency by up to 20% and to reduce the footprint of electrical equipment by up to 30%. The onboard DC grid makes it possible to integrate and to combine different energy sources including renewables. The use of an onboard DC grid provides also for a greater flexibility in placing system components in the vessel design. An onboard DC grid allows the prime movers to run at a variable speed, whereby the fuel efficiency can be maximized at each load level. By far the largest proportion of the total power load on board a vessel is for propulsion and thrusters. This power must in an AC distribution network first be converted from AC to DC which is then fed as an input to the variable frequency inverter that performs the speed control of the motor. Distribution at a DC level allows the losses in a switchboard and transformer to be eliminated from this power flow. When diesel-electric generators run at a constant rotational speed in order to keep the frequency of the AC network constant, the fuel efficiency of the diesel engine is compromised. In a DC distribution system, the rotational speed of the generator and the diesel can be varied to achieve an optimum fuel efficiency at every power level.

Each power source and consumer on the onboard DC grid is an AC or DC "island" and the only connection between them is the DC bus. This means that each power source and consumer can be controlled and optimized independently. Complex interactions that can arise between units that share an AC connection will never occur. Consumers fed by the onboard DC grid are designed not to interact even under fault conditions.

In an onboard DC grid solution, energy storage may be included to improve the system's dynamic performance. Diesel engines are slow to handle large, quick load changes. By using batteries or super capacitors or flywheels to provided power for a short time, the vessel's control capabilities can be improved. Energy storage can also be used to absorb rapid power fluctuations seen by the diesel engines, thereby improving their fuel efficiency.

The onboard DC grid is an open power platform which easily allows reconfiguration in number and types of power sources and consumers, power levels and other modernizations during the lifetime of the vessel.

The power into the DC grid is produced by a set of three phase AC generators, whereby each generator is driven by a prime mover e.g. a diesel engine. The output of each three phase AC generator is connected via a rectifier to the DC grid. The three phase AC generator may be electromagnetically optimized only for a certain rotational speed. The electromagnetic performance of the generator will thus be reduced when the rotational speed of the generator changes. The prime mover may be operated within a rotational speed interval between a minimum rotational speed and a maximum rotational speed. The three phase AC generator has to be electromagnetically optimized at the minimum rotational speed of the prime mover. The three phase AC generator is thus used with a maximum excitation at the minimum rotational speed of the prime mover, but with a lower excitation at the maximum rotational speed of the prime mover. The three phase AC generator is thus electromagnetically over dimensioned for the maximum rotational speed of the prime mover.

Prior art is disclosed in documents WO02/25802 and US 3737760.

SUMMARY

An object of the present invention is to achieve an improved method for controlling an electric power system and an improved electric power system.

The method for controlling an electric power system according to the invention is defined in claim 1.

The electric power system according to the invention is defined in claim 7.

A method for controlling an electric power system comprising:

a prime mover operable at least at a minimum rotational speed and at a maximum rotational speed,
a three phase AC synchronous generator comprising a stator with a stator winding,
a connection arrangement for switching the connection of the stator winding of the generator between a Star Y connection and a Delta Δ connection,
wherein the generator is electromagnetically dimensioned so that a first magnetic flux is achieved substantially at the minimum rotational speed when the stator winding of the generator is connected into the Delta (Δ) connection, and so that the first magnetic flux is also achieved substantially at the maximum rotational speed when the stator winding of the generator is connected into the Star (Y) connection,
the method comprising:
operating the generator in the Delta (Δ) connection at the minimum rotational speed and operating the generator in the Star (Y) connection at the maximum rotational speed, the ratio between the minimum rotational speed of the generator and the maximum rotational speed of the generator being substantially 0.60.

An electric power system comprising:

a prime mover operable at least at a minimum rotational speed and at a maximum rotational speed,
a three phase AC synchronous generator comprising a stator with a stator winding,
a connection arrangement for connecting the stator winding of the generator into a Star Y connection and into a Delta Δ connection,
a main controller, whereby:

the generator is dimensioned electromagnetically so that a first magnetic flux is achieved substantially at the minimum rotational speed when the stator winding of the generator is connected into the Delta (Δ) connection, and so that the first magnetic flux is also achieved substantially at the maximum rotational speed when the stator winding of the generator is connected into the Star (Y) connection,
the main controller is arranged to operate the generator in the Delta (Δ) connection at the minimum rotational speed and in the Star (Y) connection at the maximum rotational speed, the ratio between the minimum rotational speed of the generator and the maximum rotational speed of the generator being substantially 0.60.

The minimum rotational speed of the prime mover may be substantially 60% of the nominal rotational speed of the prime mover. The prime mover may in some cases at least for short times be driven at a minimum rotational speed slightly under 60% or slightly over 60% of the nominal rotational speed of the prime mover. The minimum rotational speed of the prime mover may at least for some prime movers be a second optimal rotational speed in addition to the nominal rotational speed. The fuel consumption may reach a second local minimum at the rotational speed 60% of the nominal rotational speed in addition to a first local minimum at the nominal rotational speed.

The maximum rotational speed of the prime mover may be substantially 100% of the nominal rotational speed of the prime mover. The prime mover may in some cases at least for short times be driven at a maximum rotational speed slightly under 100% or slightly over 100% of the nominal rotational speed of the prime mover.

The prime mover may be operated to run basically only substantially on the minimum rotational speed or substantially on the maximum rotational speed. Rotational speeds between the minimum rotational speed and the maximum rotational speed may thus be used only in a transition when changing the rotational speed between the minimum rotational speed and the maximum rotational speed and vice a versa. This could be the situation e.g. in a vessel in which the prime mover may be operated at the maximum rotational speed at sea and at the minimum rotational speed when arriving or leaving a harbour.

The prime mover may, on the other hand, also be operated to run on rotational speeds throughout the first rotational speed range extending between the minimum rotational speed and the maximum rotational speed.

The possibility of switching the connection of the three phase AC stator winding of the generator between a Star Y connection and a Delta Δ connection will make it possible to have the generator electromagnetically optimized at two different rotational speeds of the generator and thereby of the prime mover.

The ratio between the voltage over the stator winding in the generator in the Delta Δ connection and in the Star Y connection of the stator winding may be defined as shown in equation (1):

$$U_{delta} = \frac{1}{\sqrt{3}} * U_{star} = 0.58 * U_{star} \qquad (1)$$

This value 0.58 of the ratio is very near the value 0.60 of the ratio between the minimum rotational speed and the maximum rotational speed of the prime mover, which ratio of 0.60 may be achieved e.g. when the minimum rotational speed is 60% of the nominal rotational speed of the prime mover and the maximum rotational speed is 100% of the nominal rotational speed of the prime mover. The line to line voltage of the generator is $\sqrt{3}$ times the phase voltage of the generator in the Star Y connection. The line to line voltage of the generator is on the other hand equal to the phase voltage of the generator in the Delta Δ connection.

The magnetic flux Φ generated in a generator may be defined as shown in equation (2):

$$\Phi = \frac{U}{2*\pi*f} = \frac{U}{2*\pi*(speed*pole\ pairs)/60} \qquad (2)$$

where

    Φ is the magnetic flux,
    U is the voltage over the stator winding in the generator,
    f is the frequency of the generator (1/s),
    speed = rotational speed of the generator (1/min),
    pole pairs = number of poles in the generator divided by 2.

The generator can be dimensioned electromagnetically optimally at essentially the minimum rotational speed and at essentially the maximum rotational speed by changing the connection of the stator winding of the generator between the Star Y connection and the Delta Δ connection.

A decrease of the rotational speed of the generator will result in an increase in the magnetic flux and an increase of the rotational speed of the generator will result in a decrease of the magnetic flux if the voltage over the stator winding is constant. In order to keep the magnetic flux constant at different rotational speeds, there should be a corresponding change in the voltage over the stator winding in order to compensate for the change in rotational speed.

A change of the voltage over the stator winding may be achieved by changing the connecting of the stator winding of the generator between the Star Y connection and the Delta Δ connection.

There will be a close match between the change in the voltage over the stator winding and the change in the rotational speed of the generator in the case the ratio between the minimum rotational speed of the generator and the maximum rotational speed of the generator is substantially 0.60. This ratio may be achieved e.g. when the minimum rotational speed of the generator is 60% of the nominal rotational speed of the prime mover and the maximum rotational speed of the generator is 100% of the nominal rotational speed of the prime mover. This is due to the fact that the voltage over the stator winding in the generator in the Delta Δ connection is 58% of the voltage over the stator winding in the generator in the Star Y connection.

The magnetic flux of the generator can be kept at a first magnetic flux value at the minimum rotational speed being 60% of the nominal rotational speed of the prime mover when the stator winding of the generator is connected into the Delta Δ connection.

The magnetic flux of the generator can on the other hand be kept at the first magnetic flux value at the maximum rotational speed being 100% of the nominal rotational speed of the prime mover when the stator winding of the generator is connected into the Star Y connection.

This means that the generator is electromagnetically optimized at the minimum rotational speed and at the maximum rotational speed.

The output voltage of the generator i.e. the line to line voltage in the output of the generator will be kept more or less constant in the Star Y connection and in the Delta Δ connection. This will be done by an automatic voltage regulator controlling the excitation of the generator basically in the same way as in prior art solutions.

The stator winding of the generator may be operated in the Delta Δ connection when the rotational speed of the generator is substantially below the maximum rotational speed. The stator winding of the generator may on the other

**EP 3 472 932 B1**

hand be operated in the Star Y connection when the rotational speed of the generator equals substantially to the maximum rotational speed.

The generator will be optimized electromagnetically at the minimum rotational speed being substantially 60% of the nominal rotational speed of the prime mover and at the maximum rotational speed being substantially 100% of the nominal rotational speed of the prime mover. The optimization of the generator will not be perfect in rotational speeds slightly below the minimum rotational speed or in rotational speeds between the minimum rotational speed and the maximum rotational speed or in rotational speeds slightly over the maximum rotational speed, but the optimization will be better than in a prior art generator being optimized only for the minimum rotational speed. The stator winding in the prior art generator being operated only in the Star Y connection or in the Delta Δ connection throughout the whole rotational speed interval.

Generators are in practise dimensioned so that a small tolerance e.g. 0 to 5% or 0 to 10% or 0 to 15% is allowed from the optimized rotational speed. The generator can thus be driven in the Star Y connection in rotational speed intervals of 0 to 5% or 0 to 10% or 0 to 15% below the maximum rotational speed without magnetic saturation in a situation in which the voltage over the generator winding is constant. The generator can on the other hand also be driven in the Delta Δ connection in rotational speed intervals of 0 to 5% or 0 to 10% or 0 to 15% below the minimum rotational speed without magnetic saturation in a situation in which the voltage over the generator winding is constant. There is thus a certain rotational speed tolerance below the maximum rotational speed that may be used when changing the stator winding of the generator from the Star Y connection to the Delta Δ connection when the rotational speed of the generator starts to decrease from the maximum rotational speed. The same speed tolerance below the maximum rotational speed that may be used when changing the stator winding of the generator from the Delta Δ connection to the Star Y connection when the rotational speed of the generator starts to increase from the minimum rotational speed.

The generator may be disconnected from the grid when the rotational speed of the prime mover driving the generator is changed and the connection of the stator winding of the generator is changed. The generator may then be connected back to the grid again when the change has been completed. The other possibility is to keep the generator connected to the grid during the change.

The method and the electric power system according to the invention may be used in a vessel supplying a DC grid within the vessel. The DC grid may be a 1 kV DC grid and the generator used may be a high speed, low voltage generator. The nominal rotational speed of the generator may be in the range of 1000 to 1800 rpm and the AC output terminal voltage of the generator may be less than 1 kV.

There are typically several generators supplying electric power to the DC grid in a vessel. There are short term and long term variations in the demand of electric power in the vessel. The production capacity of the generators may be varied by varying the amount of generators in use and by varying the rotational speed of the generators in use. Short term variations may be handled by energy storage equipment connected to the DC grid such as batteries, super conductors and flywheels. Long term variations may be handled by varying the generator capacity by using only a part of the generators and/or by varying the rotational speed of the generators.

The method and the electric power system according to the invention can also be used in a wind turbine park being provided with generators supplying a DC grid.

The method and the electric power system according to the invention can further be used in a generator supplying a DC load without any grid.

The prime mover may be a combustion engine driven with any fuel, e.g. diesel, gas, renewables etc. The prime mover may also be a wind turbine, a hydro turbine etc.

The idea may be to optimize the efficiency of the prime mover as a function of the rotational speed and the saturation of the generator. Different sets of generator and prime mover combinations may have individual optimum values differing from the corresponding optimum values of other sets of generator and prime mover combinations.

DRAWINGS

In the following the invention will be described in greater detail by means of preferred embodiments with reference to the attached drawings, in which

Figure 1 shows a longitudinal cross section of a generator,
Figure 2 shows an electric power system,
Figure 3 shows one possibility for connecting the generator in the electric power system between a Star Y connection and a Delta Δ connection, Figure 4 shows the connection of figure 3 in a Star Y connection,
Figure 5 shows the Star Y connection of the generator in a simplified form,
Figure 6 shows the connection of figure 3 in a Delta Δ connection,
Figure 7 shows the Delta Δ connection of the generator in a simplified form,
Figure 8 shows the principal of the method for controlling the generator.

DETAILED DESCRIPTION

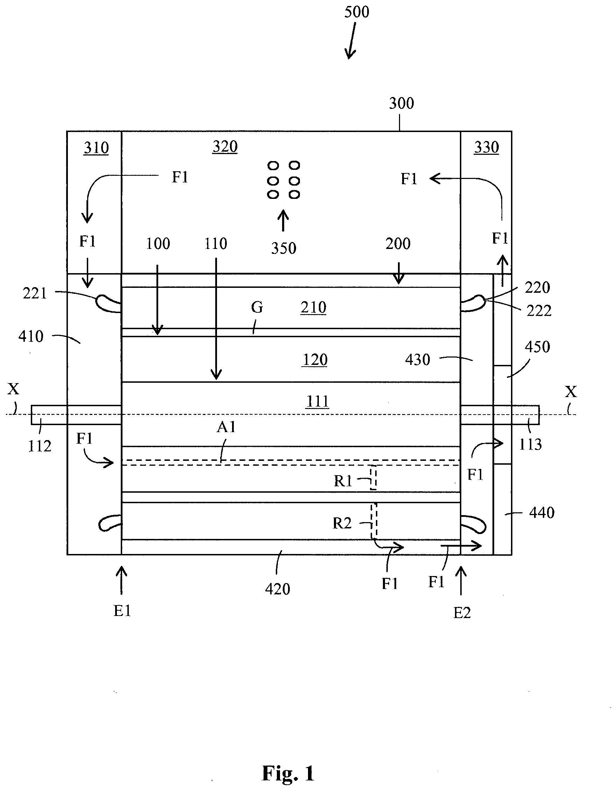

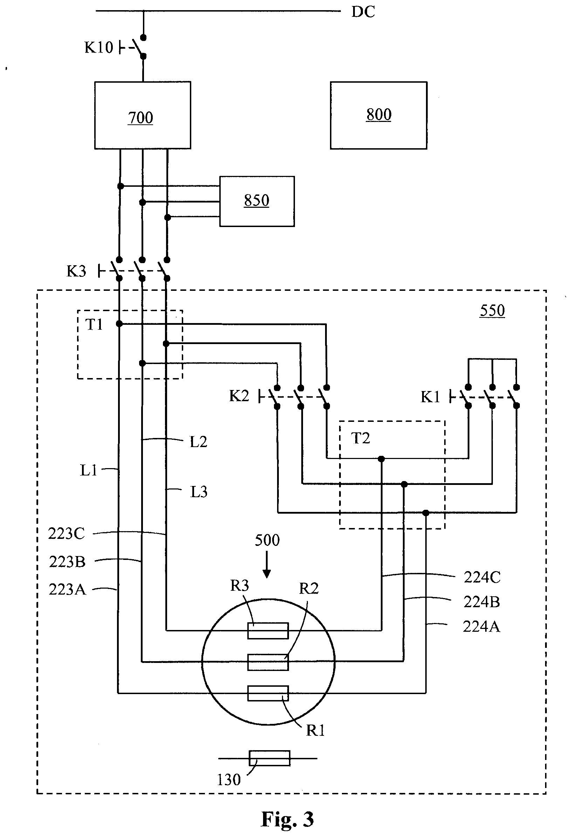

Figure 1 shows an axial cross section of a generator. The generator 500 may comprise a cylindrical rotating rotor 100 and a cylindrical stationary stator 200 surrounding the rotor 100. The rotor 100 may comprise a shaft 110 and a rotor core 120 with a rotor winding 130 (shown in the figure 3). The rotor 100 core 120 may on the other hand be provided with permanent magnets. The stator 200 may comprise a stator core 210 with a stator winding 220.

The shaft 110 of the rotor 100 may comprise a middle portion 111 and two opposite end portions 112, 113. The rotor core 120 may surround the middle portion 111 of the shaft 110. The rotor core 120 may comprise axial air channels A1 extending along the axial X-X length of the rotor core 120. The rotor core 120 may further comprise first radial air channels R1 extending between the axial air channels A1 and the outer surface of the rotor core 120. The axial air channels A1 may be open at a first end E1 of the rotor 100 and closed at a second end E2 of the rotor 100. The cooling of the generator 500 may thus be asymmetrical as cooling air is directed into the axial air channels A1 only from the first end E1 of the rotor 100. The figure shows only one axial air channel A1, but there may be a number of axial air channels A1 distributed evenly around the centre of the rotor 100.

The stator winding 220 may be received in axial X-X slots provided in the inner surface of the stator core 210. A first end portion 221 of the stator winding 220 may protrude from a first end E1 of the stator core 210 and a second end portion 222 of the stator winding 220 may protrude from a second end E2 of the stator core 210. The stator core 210 may comprise further second radial air channels R2 extending between the inner surface and the outer surface of the stator core 210. The ends of the stator winding 220 may all be taken out on the first end E1 of the generator. The first end E1 of the generator may be the N-end of the generator i.e. the Non Drive End of the generator.

The figure shows also only one first radial air channel R1 and one second radial air channel R2, but there may be a number of first radial air channels R1 and second radial air channels R2 distributed along the axial X-X length of the rotor 100.

There may be an air gap G between the inner surface of the stator core 210 and the outer surface of the rotor core 120.

There may be an air cooler 300 located above the electric generator 500. The air cooler may comprise a first compartment 310 located above the first end E1 of the rotor 100, a second compartment 320 at the middle of the air cooler 300 and a third compartment 330 located above the second end E2 of the rotor 100. The second compartment 320 at the middle of the air cooler 300 may comprise cooling air pipes 350 extending in a traverse direction in relation to the axial direction X-X across the second compartment 320 of the air cooler 300. A primary air circulation may circulate cooling air through the cooling air pipes 350. The figure shows only six cooling air pipes 350, but there may be any number of cooling pipes 350 in the second compartment 320.

There may be an inlet air plenum 410 at the first end E1 of the generator 500 and a first outlet air plenum 420 surrounding the stator 200. There may further be a second outlet air plenum 430 located at the second end E2 of the generator 500 and a third outlet air plenum 440 located axially X-X outside the second outlet air plenum 430 at the second end E2 of the generator 500. There may be air flow passages between the inlet air plenum 410 and the first compartment 310 of the air cooler 300. The axial air channels A1 in the rotor 100 may open into the inlet air plenum 410 at the first end E1 of the generator 500. The second radial air channels R2 in the stator 200 may open into the first outlet air plenum 420. There may be air passages between the first outlet air plenum 420 and the second outlet air plenum 430 at the second end E2 of the generator 500. There may further be an air passage between the second outlet air plenum 430 and a third outlet air plenum 440. The third outlet plenum 440 may be provided with a radial fan 450 mounted on the end portion 113 of the shaft 110 of the generator 500. The air passage between the second outlet air plenum 430 and the third outlet air plenum 440 may be arranged through the radial fan 450. The radial fan 450 may suck air from the second outlet air plenum 430 into the centre of the radial fan 450 and blow the air from the circumference of the radial fan 450 into the third outlet air plenum 440. There may further be air passages between the third outlet air plenum 440 and the third compartment 330 in the air cooler 300.

The secondary air circulation may be an air circulation flowing in a closed loop between the air cooler 300 and the generator 500. Cooling air F1 may flow from the first compartment 310 of the air cooler 300 to the inlet air plenum 410, from the inlet air plenum 410 to the axial air channels A1 at the first end E1 of the rotor 100, from the axial air channels A1 to the first radial air channels R1 in the rotor 100, from the first radial air channels R1 in the rotor 100 to the air gap G between the rotor 100 and the stator 200, from the air gap G to the second radial air channels R2 in the stator 200, from the second radial air channels R2 in the stator 200 to the first outlet air plenum 420 surrounding the stator 200, from the first outlet plenum 420 to the second outlet plenum 430 at the second end E2 of the rotor 100, from the second outlet plenum 430 to the middle portion of the radial fan 450 in the third outlet air plenum 440, from the circumference of the radial fan 450 to the third outlet air plenum 440, from the third outlet plenum 440 to the third compartment 330 in the air cooler 300 and from the third compartment 330 in the air cooler 300 through the second compartment 320 in the air cooler 300 to the first compartment 310 in the air cooler 300. The cooling air flow F1 may be cooled when it passes across the cooling air pipes 350 in the second compartment 320 in the air cooler 300.

6

Cooling air F1 may thus be directed from the second outlet air plenum 430 to the suction side of the radial fan 450 and from the pressure side of the radial fan 450 to the air cooler 300. The cooling air F1 may thus be directed from the pressure side of the radial fan 450 back to the inlet air plenum 410. The cooling air F1 may be directed from the pressure side of the radial fan 450 directly back to the inlet air plenum 410 in a case where there is no air cooler 300. A return flow path may then be needed to direct the cooling air F1 from the pressure side of the radial fan 450 to the inlet air plenum 410.

Cooling air F1 may thus be directed to the axial air channels A1 from the first end E1 of the rotor 100. The cooling air F1 may flow in the axial air channels A1 towards to opposite second axial end E2 of the rotor 100. Cooling air F1 may be deviated to the first radial air channels R1 as the cooling air flow F1 propagates towards the second end E2 of the rotor 100. The axial air channels A1 may be closed at the second end E2 of the rotor 100. This means that all the cooling air flow F1 that flows into the axial air channels A1 may be divided to the first radial air channels R1 along the axial X-X length of the rotor 100.

The secondary air circulation is in the figure shown as an air circulation flowing in a closed loop between the air cooler 300 and the generator 500. It would naturally also be possible to arrange the secondary air circulation as an open air circulation without an air cooler 300. External air could be sucked into the generator 500 from the first end E1 of the generator 500 and blown out from the second end E2 of the generator 500.

The generator 500 may be provided with an enclosure enclosing the generator 500 and the air cooler 300 into a unit.

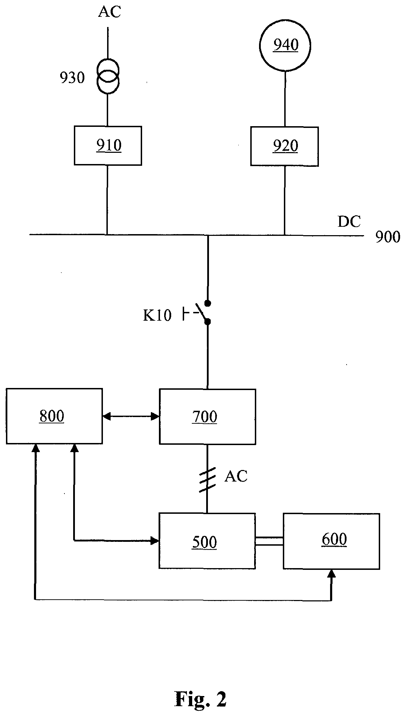

Fig. 2 shows an electric power system. The electric power system may comprise a prime mover 600 driving a three phase AC generator 500, a rectifier 700 converting the three phase AC voltage produced by the generator 500 into a DC voltage, a main controller 800, a DC grid, and AC and DC consumers connected to the DC grid. The shaft of the generator 500 may be connected mechanically either directly or through a transmission to the shaft of the prime mover 600. The prime mover 600 may drive the generator 500. The rotational speed of the generator 500 may depend linearly on the rotational speed of the prime mover 600. The generator 500 may produce a three phase AC voltage in the output terminals of the generator 500. The output terminals of the generator 500 may be connected to input terminals of the rectifier 700. The rectifier may convert the three phase AC output voltage produced by the generator 500 into a DC voltage. The DC voltage at the output of the rectifier 700 may be connected via a DC switch K10 to a DC grid 900. The DC grid 900 may be used to distribute electric power to consumers being connected to the DC grid 900. AC consumers may be connected to the DC grid 900 via an inverter 910 and a transformer 930. The inverter 910 may convert the DC into a three phase AC and the transformer 930 may form an electrical isolation between the DC grid 900 and the AC consumers. Three phase electrical motors 940 may also be connected to the DC grid 900 via inverters 920 converting the DC voltage into a three phase AC voltage. DC consumers may further be connected to the DC grid 900. The main controller 800 may control the generator 500, the rectifier 700 and the prime mover 600. The main controller 800 may receive measurement information from the generator 500, the rectifier 700, and the prime mover 600. The measurement information may include e.g. rotational speeds of the generator and/or the prime mover, voltages and/or currents of the output of the generator 500 and/or voltages and/or currents on either or on both sides of the rectifier 700. The DC grid 900 may be a DC distribution grid in a vessel.

Figure 3 shows one possibility for connecting the generator in the electric power system between a Star Y connection and a Delta Δ connection.

The three phase AC generator 500 may comprise a stator winding 220 having three phases L1, L2, L3 and a rotor winding 130. The reference signs R1, R2, R3 denote the resistances of the respective phase L1, L2, L3 of the stator winding 220. Both ends 223A, 223B, 223C, 224A, 224B, 224C of each phase L1, L2, L3 in the stator winding 220 may be taken out from the stator 200 and wired to a connection space positioned outside the stator core 210. A first end 223A, 223B, 223C of the phases L1, L2, L3 of the stator winding 220 may be wired to respective connection points in a first output terminal T1 positioned in the connection space and a second end 224A, 224B, 224C of the phases L1, L2, L3 of the stator winding 220 may be wired to respective connection points in a second output terminal T2 positioned in the connection space. A third switch K3 may be connected between the first output terminal T1 and an input terminal of the inverter 700. The output of the inverter 700 may be connected via a DC switch K10 to the DC grid. The output voltages of the generator 500 may be fed to an automatic voltage control AVR 850 which controls the output voltage of the generator 500. This may be done by controlling the excitation of the rotor winding 130 of the generator 500. The main controller 800 may control one or several of the components in the power producing system. The connection space may be arranged e.g. in the air cooler 300 or in a separate connection box attached to the frame of the generator 500. The connection space may thus be formed within the generator 500.

The electric power system may further comprise a connection arrangement 550 making it possible to connect the stator winding 220 into a Star Y connection and into a Delta Δ connection. The connection arrangement 550 may comprise a wiring, a first switch K1 and a second switch K2. The second switch K2 may be connected between the first output terminal T1 and the second output terminal T2. The first side of the first switch K1 may be connected to the respective connection points in the second output terminal T2 and the opposite second side of the first switch K1 may be short circuited. The third switch K3 may be the main switch connecting and disconnecting the generator 500 to and from the inverter 700 and thereby to and from the DC grid 900. The first switch K1, the second switch K2, and the third switch K3 may be operated by the main controller 800. The rotational speed of the generator 500 and/or the rotational speed of the prime mover 600 may be measured and fed to the main controller 800. The switches K1, K2, K3 may be line breakers or based on semiconductor switches. The semiconductor switches may be realized as a separate switch for each phase.

The connection arrangement 550 including the output terminals T1, T2 may be positioned in the connection space of the generator 500. The connection arrangement 550 may be integrated into the generator so that the connection arrangement 550 forms a part of the generator 500. The connection arrangement 550 and the output terminals T1, T2 may be positioned within the enclosure of the generator 500. The output terminals T1, T2 may be positioned in a connection box. The connection box may be arranged within the enclosure of the generator 500 or the connection box may be attached to an outer surface of the enclosure of the generator 500. The connection arrangement 550 may be positioned in the connection box or somewhere else within the enclosure of the generator 500 or partly within the connection box and partly somewhere else within the enclosure of the generator 500. The connection arrangement 550 may be positioned partly or entirely within the air cooler 300 of the generator 500. The third switch K3 may also be integrated into the generator 500. The third switch K3 may on the other hand be positioned outside the generator 500.

All the switches K10, K1, K2, K3 are open in figure 3.

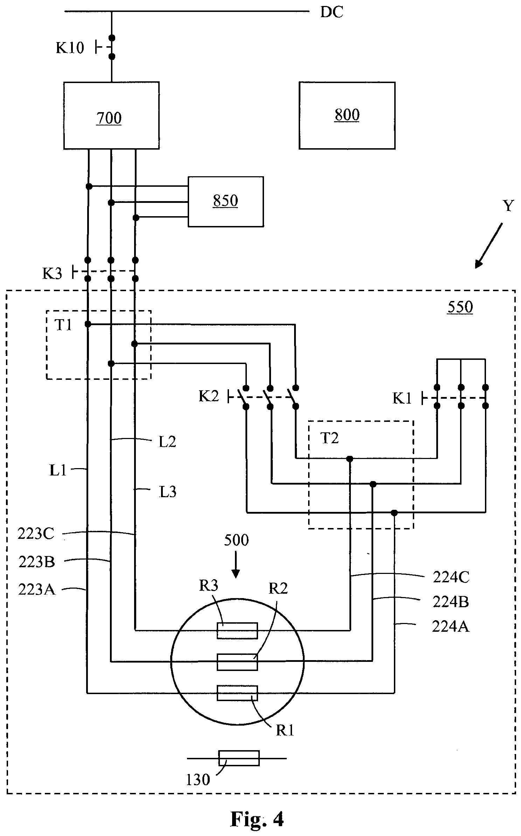

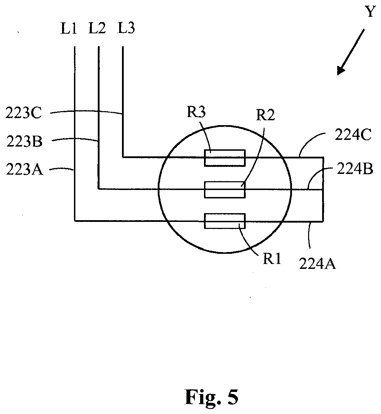

Figure 4 shows the connection of figure 3 in a Star Y connection and figure 5 shows the Star Y connection of the generator in a simplified form. The terminals T1; T2 and the switches K1, K2 have been left out in figure 5.

The stator winding 220 of the generator 500 winding may be connected in a Star Y connection by closing the first switch K1 and keeping the second switch K2 open. The DC switch K10 and the third switch K3 are naturally closed, whereby the generator 500 produces electric power to the DC grid.

The second ends 224A, 224B, 224C of all phases L1, L2, L3 of the stator winding 220 are connected via the second output terminal T2 and the first switch K1 together to form the star point in the connection. The first ends 223A, 223B, 223C of the phases L1, L2, L3 of the stator winding 220 are connected to the first output terminal T1 and thereby to the output of the generator 500.

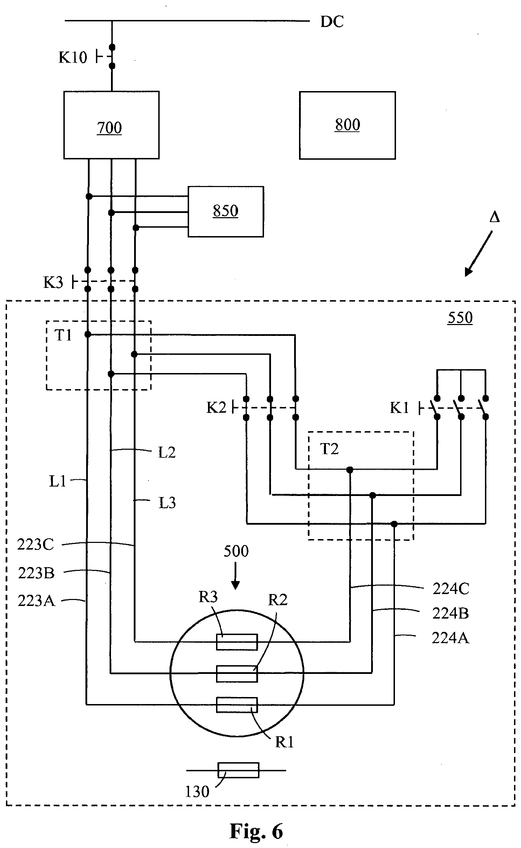

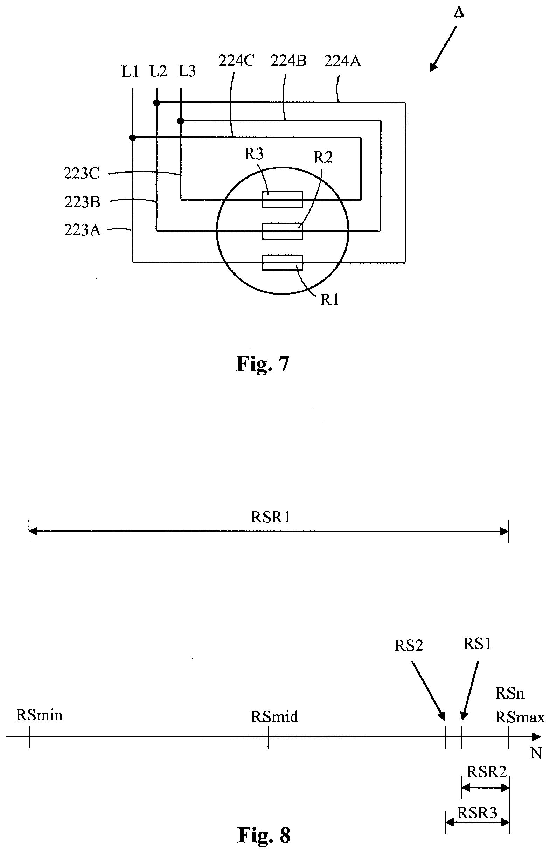

Figure 6 shows the connection of figure 3 in a Delta Δ connection and figure 7 shows the Delta Δ connection of the generator in a simplified form. The terminals T1; T2 and the switches K1, K2 have been left out in figure 7.

The stator winding 220 of the generator 500 may be connected in a Delta Δ connection by closing the second switch K2 and keeping the first switch K1 open. The DC switch K10 and the third switch K3 are naturally closed, whereby the generator 500 produces electric power to the DC grid.

The second end 224A of the first phase L1 in the stator winding 220 is connected via the second output terminal T2 and the second switch K2 to the first end 223B of the second phase L2 in the stator winding 220 in the first output terminal T1. The second end 224B of the second phase L2 in the stator winding 220 is connected via the second output terminal T2 and the second switch K2 to the first end 223C of the third phase L3 in the stator winding 220 in the first output terminal T1. The second end 224C of the third phase L3 in the stator winding 220 is connected via the second output terminal T2 and the second switch K2 to the first end 223A of the first phase L1 in the stator winding 220 in the first output terminal T1. The first ends 223A, 223B, 223C of the phases L1, L2, L3 of the stator winding 200 are connected to the first output terminal T1 of the generator 500.

The generator 500 may be electromagnetically optimized only for a certain rotational speed. The electromagnetic performance of the generator 500 will thus be reduced when the rotational speed of the generator 500 changes. A prime mover 600 may e.g. be operated at two different rotational speeds i.e. at a minimum rotational speed and at a maximum rotational speed. The generator are in prior art solutions electromagnetically optimized only at the minimum rotational speed. This means that the generator 500 is operated with substantially a maximum magnetic flux at the minimum rotational speed of the prime mover 600, but with a lower magnetic flux at the maximum rotational speed of the prime mover 600. The generator 500 is thus electromagnetically over dimensioned for the maximum rotational speed of the prime mover 600.

The possibility to connect the stator winding 220 of the generator 500 into a Star Y connection and into a Delta Δ connection will make it possible to have the generator electromagnetically optimized at the minimum rotational speed of the prime mover 600 and at the maximum rotational speed of the prime mover 600. The ratio between the minimum rotational speed of the prime mover 600 and the maximum rotational speed of the prime mover 600 may be substantially 0.60. This may be achieved e.g. in a situation in which the minimum rotational speed of the prime mover 600 is substantially 60% of the nominal speed of the prime mover 600 and the maximum rotational speed of the prime mover 600 is substantially 100% of the nominal rotational speed of the prime mover 600. The ratio between the voltage over the stator winding 220 in the generator 500 in the Delta Δ connection and in the Star Y connection is $1/\sqrt{3} = 0.58.$

This value is very near to the value of the ratio 0.60 between the minimum rotational speed and the maximum rotational speed.

The generator 500 can thus be dimensioned electromagnetically optimally at the minimum rotational speed and the maximum rotational speed by changing the connection of the stator winding 220 between the Delta Δ connection and the Star Y connection.

Figure 8 shows the principal of the method for controlling the generator. The horizontal axis of the figure shows the rotational speed N of the prime mover 600 and thereby also the rotational speed N of the generator 500.

The generator 500 may be operated at least at a minimum rotational speed RSmin and at a maximum rotational speed RSmax. A first rotational speed range RSR1 extends between the minimum rotational speed RSmin and the maximum rotational speed RSmax. A middle rotational speed RSmid is in the middle between the minimum rotational speed RSmin and the maximum rotational speed RSmax. This means that RSmid = (RSmin + RSmax) / 2.

A first threshold rotational speed RS1 is defined below the maximum rotational speed RSmax, whereby a second rotational speed range RSR2 is formed between the first threshold rotational speed RS1 and the maximum rotational speed RSmax.

A second threshold rotational speed RS2 is defined below the maximum rotational speed RSmax, whereby a third rotational speed range RSR3 is formed between the second threshold rotational speed RS2 and the maximum rotational speed RSmax.

The first threshold rotational speed RS1 and the second rotational speed RS2 may have the same value or they may have a different value.

The main controller 800 may be arranged to operate the generator 500 in the Delta Δ connection at the minimum rotational speed RSmin and in the Star Y connection at the maximum rotational speed RSmax.

The change of the connection of the stator winding 220 of the generator 500 from the Delta Δ connection to the Star Y connection and vice a versa may be done so that the main controller 800 controls the connection arrangement 550 to connect the stator winding 220 of the generator 500 into the desired connection. The main controller 800 will thus control the switches K1 and K2 in the connection arrangement 550.

The ratio between the minimum rotational speed RSmin of the prime mover 600 and the maximum rotational speed RSmax of the prime mover 600 may be substantially 0.60. This may be achieved e.g. in a situation in which the minimum rotational speed RSmin of the prime mover 600 is substantially 60% of the nominal rotational speed RSn of the prime mover 600 and the maximum rotational speed RSmax of the prime mover 600 is substantially 100% of the nominal rotational speed RSn of the prime mover 600.

The generator 500 is thus dimensioned electromagnetically optimally so that a first magnetic flux Φ is achieved at the minimum rotational speed RSmin when the stator winding 220 of the generator 500 is connected into the Delta Δ connection, and so that the first magnetic flux Φ is also achieved at the maximum rotational speed RSmax when the stator winding 220 of the generator 500 is connected into the Star Y connection.

The first magnetic flux Φ is a magnetic flux near a maximum magnetic flux Φ of the generator. The generator 500 may be electromagnetically dimensioned so that a substantially maximum magnetic flux Φ of the generator 500 is achieved at a rotational speed of 15% or 10% or 5% below the maximum rotational speed RSmax when the generator 500 is connected in the Star connection. The generator 500 may on the other hand also be electromagnetically dimensioned so that the same substantially maximum flux Φ of the generator 500 is also achieved at a rotational speed of 15% or 10% or 5% below the minimum rotational speed RSmin when the generator 500 is connected in the Delta connection. The generator 500 may thus be operated in the Star connection in a rotational speed interval of 0 to 15% or 0 to 10% or 0 to 5% below the maximum rotational speed RSmax at a constant voltage over the stator winding without the generator being saturated. The generator 500 may also be operated in the Delta connection in a rotational speed interval of 0 to 15% or 0 to 10% or 0 to 5% below the minimum rotational speed RSmin at a constant voltage over the stator winding without the generator being saturated. An essentially maximum magnetic flux Φ of the generator 500 will be achieved at the lower speed limit in each case when the output voltage of the generator 500 is kept more or less constant.

The connection of the stator winding 220 of the generator 500 may, in a situation in which the rotational speed of the generator 500 increases, be changed from the Delta Δ connection into the Star Y connection within a second rotational speed range RSR2 extending from the first threshold value RS1 of the rotational speed to the maximum rotational speed RSmax, the first threshold value RS1 of the rotational speed being lower than the maximum rotational speed RSmax.

The connection of the stator winding 220 of the generator 500 may, in a situation in which the rotational speed of the generator 500 decreases, be changed from the Star Y connection into the Delta Δ connection within a third rotational speed range RSR3 extending from the maximum rotational speed RSmax to the second threshold value RS2 of the rotational speed, the second threshold value RS2 of the rotational speed being lower than the maximum rotational speed RSmax.

The first threshold value RS1 of the rotational speed may be 85%, or 90% or 95% of the maximum rotational speed RSmax of the generator 500.

The second threshold value RS2 of the rotational speed may be 85% or 90% or 95% of the maximum rotational speed RSmax of the generator 500.

The first threshold value RS1 of the rotational speed and the second threshold value RS2 of the rotational speed may be same i.e. they may form only one common threshold value of the rotational speed.

The rotor winding 130 of the generator 500 may be excited with a DC current produced by an exciter system. The exciter system may be based on a rotating exciter or on a static exciter. The magnetic field and thereby the output voltage of the generator 500 may be controlled with the AVR 850 which may control the DC excitation current and the voltage of the rotor winding 130. The DC excitation current and/or the voltage of the rotor 100 of the generator 500 for the Star Y connected and the Delta Δ connected stator winding 220 may be different, but this is not a dominant design criteria. The magnitude of the DC exciting current and/or the voltage is more dependent on the load of the generator 500 than on the connection of the stator winding 220.

The possibility to change the connection of the stator winding 220 of the generator 500 between a Star Y connection and a Delta Δ connection will make it possible to have the generator electromagnetically optimized at substantially the minimum rotational speed RSmin and at substantially the maximum rotational speed RSmax. The generator 500 will thus be electromagnetically optimized at the same rotational speed points as the prime mover 600.

The generator 500 is advantageously a synchronous generator with a power of at least 500 kW, preferably at least 1 MW. The advantage of the use of the Star-Delta Y-Δ connection is greater in big generators. Over dimensioning of a big generator is expensive.

The rectifier 700 may be a separate entity or it could be integrated into the generator 500. The rectifier 700 could e.g. be positioned within the air cooler 300 of the generator 500. The rectifier 700 may be a passive rectifier 700 as the output voltage of the generator 500 may be regulated with the DC excitation current and/or voltage of the rotor 100 of the generator 500. The regulation of the output voltage of the generator 500 i.e. the input voltage of the rectifier 700 will affect the DC output voltage of the rectifier 700. The rectifier 700 may on the other hand be an active rectifier 700, whereby the lead angle of the rectifier 700 is regulated. A greater lead angle leads to a smaller DC voltage and vice a versa.

It will be obvious to a person skilled in the art that, as the technology advances, the inventive concept can be implemented in various ways. The invention and its embodiments are not limited to the examples described above but may vary within the scope of the claims.

**Claims**

1. A method for controlling an electric power system comprising:

   a prime mover (600) operable at least at a minimum rotational speed (RSmin) and at a maximum rotational speed (RSmax),
   a three phase (L1, L2, L3) AC synchronous generator (500) comprising a stator (200) with a stator winding (220), a connection arrangement (550) for connecting the stator winding (220) of the generator (500) into a Star (Y) connection and into a Delta (Δ) connection,
   wherein the generator (500) is electromagnetically dimensioned so that a first magnetic flux (Φ) is achieved at substantially the minimum rotational speed (RSmin) when the stator winding (220) of the generator (500) is connected into the Delta (Δ) connection, and so that the first magnetic flux (Φ) is also achieved at substantially the maximum rotational speed (RSmax) when the stator winding (220) of the generator (500) is connected into the Star (Y) connection,
   the method being **characterised in that** it comprises :
   operating the generator (500) in the Delta (Δ) connection at the minimum rotational speed (RSmin) and operating the generator (500) in the Star (Y) connection at the maximum rotational speed (RSmax), the ratio between the minimum rotational speed (RSmin) of the generator (500) and the maximum rotational speed (RSmax) of the generator (500) being substantially 0.60.

2. The method according to claim 1, further comprising, in a situation in which the rotational speed of the generator (500) increases, changing the connection of the stator winding (220) of the generator (500) from the Delta (Δ) connection into the Star (Y) connection within a second rotational speed range (RSR2) extending from a first threshold value (RS1) of the rotational speed to the maximum rotational speed (RSmax), the first threshold value (RS1) of the rotational speed being lower than the maximum rotational speed (RSmax).

3. The method according to claim 1 or 2, further comprising, in a situation in which the rotational speed of the generator (500) decreases, changing the connection of the stator winding (220) of the generator (500) from the Star (Y) connection into the Delta (Δ) connection within a third rotational speed range (RSR3) extending from the maximum rotational speed (RSmax) to a second threshold value (RS2) of the rotational speed, the second threshold value (RS2) of the rotational speed being lower than the maximum rotational speed (RSmax).

4. The method according to any one of claims 1 to 3, further comprising selecting the minimum rotational speed (RSmin) of the prime mover (600) to be substantially 60% of the nominal rotational speed (RSn) of the prime mover (600).

5. The method according to any one of claims 1 to 4, further comprising selecting the maximum rotational speed (RSmax) of the prime mover (600) to be substantially 100% of the nominal rotational speed (RSn) of the prime mover (600).

6. The method according to any one of claims 2 to 5, further comprising selecting the first threshold value (RS1) of the rotational speed and the second threshold value (RS2) of the rotational speed to be 85% of the maximum rotational speed (RSmax) of the generator (500).

7. An electric power system comprising:

    a prime mover (600) operable at least at a minimum rotational speed (RSmin) and at a maximum rotational speed (RSmax),
    a three phase (L1, L2, L3) AC synchronous generator (500) comprising a stator (200) with a stator winding (220),
    a connection arrangement (550) for connecting the stator winding (220) of the generator (500) into a Star (Y) connection and into a Delta (Δ) connection,
    a main controller (800), wherein:

        the generator (500) is dimensioned electromagnetically so that a first magnetic flux (Φ) is achieved substantially at the minimum rotational speed (RSmin) when the stator winding (220) of the generator (500) is connected into the Delta (Δ) connection, and so that the first magnetic flux (Φ) is also achieved substantially at the maximum rotational speed (RSmax) when the stator winding (220) of the generator (500) is connected into the Star (Y) connection, the electric power system being **characterised in that** :
        the main controller (800) is arranged to operate the generator (500) in the Delta (Δ) connection at the minimum rotational speed (RSmin) and in the Star (Y) connection at the maximum rotational speed (RSmax), the ratio between the minimum rotational speed (RSmin) of the generator (500) and the maximum rotational speed (RSmax) of the generator (500) being substantially 0.60.

8. The electric power system according to claim 7, wherein, in a situation in which the rotational speed of the generator (500) increases, the connection of the stator winding (220) of the generator (500) is changed from the Delta (Δ) connection into the Star (Y) connection within a second rotational speed range (RSR2) extending from a first threshold value (RS1) of the rotational speed to the maximum rotational speed (RSmax), the first threshold value (RS1) of the rotational speed being lower than the maximum rotational speed (RSmax).

9. The electric power system according to claim 7 or 8, wherein, in a situation in which the rotational speed of the generator (500) decreases, the connection of the stator winding (220) of the generator (500) is changed from the Star (Y) connection into the Delta (Δ) connection within a third rotational speed range (RSR3) extending from the maximum rotational speed (RSmax) to a second threshold value (RS2) of the rotational speed, the second threshold value (RS2) of the rotational speed being lower than the maximum rotational speed (RSmax).

10. The power system according to claim 8 or 9, wherein the first threshold value (RS1) of the rotational speed and the second threshold value (RS2) of the rotational speed is selected to be 85% of the maximum rotational speed (RSmax) of the generator (500).

11. The electric power system according to any one of claims 7 to 10, wherein a first end (223A, 223B, 223C) of each phase (L1, L2, L3) of the stator winding (220) is connected to a respective connection point in a first output terminal (T1) and a second end (224A, 224B, 224C) of each phase (L1, L2, L3) of the stator winding (220) is connected to a respective connection point in a second output terminal (T2), said first output terminal (T1) and said second output terminal (T2) being arranged in a connection space.

12. The electric power system according to claim 11, wherein the connection points in the second output terminal (T2) are connected to respective connection points at a first side of a first switch (K1), whereby each of the connection points at a second side of the first switch (K1) are short circuited to form the star point in the Star (Y) connection of the stator winding (220).

13. The electric power system according to claim 11 or 12, wherein the connection points in the second output terminal (T2) are connected via a second switch (K2) to respective connection points in the first output terminal (T1) so that the second end (223A) of the first phase (L1) in the stator winding (220) is connected to the first end of the second phase (L2) in the stator winding (200), the second end (223B) of the second phase (L2) in the stator winding (220) is connected to the first end of the third phase (L3) in the stator winding (220), and the second end (223C) of the third phase (L3) in the stator winding (220) is connected to the first end of the first phase (L1) in the stator winding (220), whereby the stator winding (220) becomes connected in the Delta ($\Delta$) connection.

**Patentansprüche**

1. Verfahren zum Steuern eines Systems für elektrische Leistung, das Folgendes umfasst:

   einen Primärantrieb (600), der mindestens mit einer minimalen Drehzahl (RSmin) und mit einer maximalen Drehzahl (RSmax) betreibbar ist,
   einen Dreiphasen-Synchronwechselstromgenerator (500) (L1, L2, L3), der einen Stator (200) mit einer Statorwicklung (220) umfasst,
   eine Verbindungsanordnung (550) zum Verbinden der Statorwicklung (220) des Generators (500) in einer Sternverbindung (Y-Verbindung) und in einer Deltaverbindung ($\Delta$-Verbindung),
   wobei der Generator (500) elektromagnetisch derart dimensioniert ist, dass ein erster Magnetfluss ($\phi$) im Wesentlichen bei der minimalen Drehzahl (RSmin) erzielt wird, wenn die Statorwicklung (220) des Generators (500) in der Deltaverbindung ($\Delta$-Verbindung) verbunden ist, und derart, dass der erste Magnetfluss ($\phi$) auch im Wesentlichen bei der maximalen Drehzahl (RSmax) erzielt wird, wenn die Statorwicklung (220) des Generators (500) in der Sternverbindung (Y-Verbindung) verbunden ist,
   wobei das Verfahren **dadurch gekennzeichnet ist, dass** es Folgendes umfasst:
   Betreiben des Generators (500) in der Deltaverbindung ($\Delta$-Verbindung) mit der minimalen Drehzahl (RSmin) und Betreiben des Generators (500) in der Sternverbindung (Y-Verbindung) mit der maximalen Drehzahl (RSmax), wobei das Verhältnis zwischen der minimalen Drehzahl (RSmin) des Generators (500) und der maximalen Drehzahl (RSmax) des Generators (500) im Wesentlichen 0,60 beträgt.

2. Verfahren nach Anspruch 1, das ferner in einer Situation, in der die Drehzahl des Generators (500) ansteigt, das Ändern der Verbindung der Statorwicklung (220) des Generators (500) von der Deltaverbindung ($\Delta$-Verbindung) zu der Sternverbindung (Y-Verbindung) innerhalb eines zweiten Drehzahlbereichs (RSR2), der sich von einem ersten Schwellenwert (RS1) der Drehzahl bis zur maximalen Drehzahl (RSmax) erstreckt, umfasst, wobei der erste Schwellenwert (RS1) der Drehzahl niedriger als die maximale Drehzahl (RSmax) ist.

3. Verfahren nach Anspruch 1 oder 2, das ferner in einer Situation, in der die Drehzahl des Generators (500) abnimmt, das Ändern der Verbindung der Statorwicklung (220) des Generators (500) von der Sternverbindung (Y-Verbindung) zu der Deltaverbindung ($\Delta$-Verbindung) innerhalb eines dritten Drehzahlbereichs (RSR3), der sich von der maximalen Drehzahl (RSmax) bis zu einem zweiten Schwellenwert (RS2) der Drehzahl erstreckt, umfasst, wobei der zweite Schwellenwert (RS2) der Drehzahl niedriger als die maximale Drehzahl (RSmax) ist.

4. Verfahren nach einem der Ansprüche 1 bis 3, das ferner das Auswählen der minimalen Drehzahl (RSmin) des Primärantriebs (600), derart, dass sie im Wesentlichen 60 % der Nenndrehzahl (RSn) des Primärantriebs (600) beträgt, umfasst.

5. Verfahren nach einem der Ansprüche 1 bis 4, das ferner das Auswählen der maximalen Drehzahl (RSmax) des Primärantriebs (600), derart, dass sie im Wesentlichen 100 % der Nenndrehzahl (RSn) des Primärantriebs (600) beträgt, umfasst.

6. Verfahren nach einem der Ansprüche 2 bis 5, das ferner das Auswählen des ersten Schwellenwertes (RS1) der Drehzahl und des zweiten Schwellenwertes (RS2) der Drehzahl, derart, dass sie 85 % der maximalen Drehzahl (RSmax) des Generators (500) betragen, umfasst.

7. System für elektrische Leistung, das Folgendes umfasst:

einen Primärantrieb (600), der mindestens mit einer minimalen Drehzahl (RSmin) und mit einer maximalen Drehzahl (RSmax) betreibbar ist,

einen Dreiphasen-Synchronwechselstromgenerator (500) (L1, L2, L3), der einen Stator (200) mit einer Statorwicklung (220) umfasst,

eine Verbindungsanordnung (550) zum Verbinden der Statorwicklung (220) des Generators (500) in einer Sternverbindung (Y-Verbindung) und in einer Deltaverbindung (Δ-Verbindung),

eine Hauptsteuereinrichtung (800), wobei:

der Generator (500) elektromagnetisch derart dimensioniert ist, dass ein erster Magnetfluss ($\phi$) im Wesentlichen bei der minimalen Drehzahl (RSmin) erzielt wird, wenn die Statorwicklung (220) des Generators (500) in der Deltaverbindung (Δ-Verbindung) verbunden ist, und derart, dass der erste Magnetfluss ($\phi$) auch im Wesentlichen bei der maximalen Drehzahl (RSmax) erzielt wird, wenn die Statorwicklung (220) des Generators (500) in der Sternverbindung (Y-Verbindung) verbunden ist, wobei das System für elektrische Leistung **dadurch gekennzeichnet ist, dass**:

die Hauptsteuereinrichtung (800) ausgelegt ist, den Generator (500) in der Deltaverbindung (Δ-Verbindung) mit der minimalen Drehzahl (RSmin) und in der Sternverbindung (Y-Verbindung) mit der maximalen Drehzahl (RSmax) zu betreiben, wobei das Verhältnis zwischen der minimalen Drehzahl (RSmin) des Generators (500) und der maximalen Drehzahl (RSmax) des Generators (500) im Wesentlichen 0,60 beträgt.

8. System für elektrische Leistung nach Anspruch 7, wobei in einer Situation, in der die Drehzahl des Generators (500) ansteigt, die Verbindung der Statorwicklung (220) des Generators (500) innerhalb eines zweiten Drehzahlbereichs (RSR2), der sich von einem ersten Schwellenwert (RS1) der Drehzahl bis zur maximalen Drehzahl (RSmax) erstreckt, von der Deltaverbindung (Δ-Verbindung) zu der Sternverbindung (Y-Verbindung) geändert wird, wobei der erste Schwellenwert (RS1) der Drehzahl niedriger als die maximale Drehzahl (RSmax) ist.

9. System für elektrische Leistung nach Anspruch 7 oder 8, wobei in einer Situation, in der die Drehzahl des Generators (500) abnimmt, die Verbindung der Statorwicklung (220) des Generators (500) innerhalb eines dritten Drehzahlbereichs (RSR3), der sich von der maximalen Drehzahl (RSmax) bis zu einem zweiten Schwellenwert (RS2) der Drehzahl erstreckt, von der Sternverbindung (Y-Verbindung) zu der Deltaverbindung (Δ-Verbindung) geändert wird, wobei der zweite Schwellenwert (RS2) der Drehzahl niedriger als die maximale Drehzahl (RSmax) ist.

10. Energiesystem nach Anspruch 8 oder 9, wobei der erste Schwellenwert (RS1) der Drehzahl und der zweite Schwellenwert (RS2) der Drehzahl derart ausgewählt sind, dass sie 85 % der maximalen Drehzahl (RSmax) des Generators (500) betragen.

11. System für elektrische Leistung nach einem der Ansprüche 7 bis 10, wobei ein erstes Ende (223A, 223B 223C) jeder Phase (L1, L2, L3) der Statorwicklung (220) mit einem jeweiligen Verbindungspunkt in einem ersten Ausgangsanschluss (T1) verbunden ist und ein zweites Ende (224A, 224B, 224C) jeder Phase (L1, L2, L3) der Statorwicklung (220) mit einem jeweiligen Verbindungspunkt in einem zweiten Ausgangsanschluss (T2) verbunden ist, wobei der erste Ausgangsanschluss (T1) und der zweite Ausgangsanschluss (T2) in einem Verbindungsraum angeordnet sind.

12. System für elektrische Leistung nach Anspruch 11, wobei die Verbindungspunkte im zweiten Ausgangsanschluss (T2) mit jeweiligen Verbindungspunkten auf einer ersten Seite eines ersten Schalters (K1) verbunden sind, wobei jeder der Verbindungspunkte auf einer zweiten Seite des ersten Schalters (K1) kurzgeschlossen ist, um den Sternpunkt in der Sternverbindung (Y-Verbindung) der Statorwicklung (220) zu bilden.

13. System für elektrische Leistung nach Anspruch 11 oder 12, wobei die Verbindungspunkte im zweiten Ausgangsanschluss (T2) über einen zweiten Schalter (K2) mit jeweiligen Verbindungspunkten im ersten Ausgangsanschluss (T1) verbunden sind, derart, dass das zweite Ende (223A) der ersten Phase (L1) in der Statorwicklung (220) mit dem ersten Ende der zweiten Phase (L2) in der Statorwicklung (200) verbunden ist, das zweite Ende (223B) der zweiten Phase (L2) in der Statorwicklung (220) mit dem ersten Ende der dritten Phase (L3) in der Statorwicklung (220) verbunden ist und das zweite Ende (223C) der dritten Phase (L3) in der Statorwicklung (220) mit dem ersten Ende der ersten Phase (L1) in der Statorwicklung (220) verbunden ist, wobei die Statorwicklung (220) in der Deltaverbindung (Δ-Verbindung) verbunden ist.

**Revendications**

1. Procédé de commande d'un système d'alimentation électrique comprenant :

   un générateur de force motrice (600) exploitable au moins à une vitesse de rotation minimale (RSmin) et à une vitesse de rotation maximale (RSmax),
   un générateur synchrone C.A. triphasé (L1, L2, L3) (500) comprenant un stator (200) à enroulement statorique (220),
   un agencement de connexion (550) pour connecter l'enroulement statorique (220) du générateur (500) dans un montage en étoile (Y) et un montage en triangle (Δ),
   dans lequel le générateur (500) est dimensionné électromagnétiquement de telle sorte qu'un premier flux magnétique (Φ) soit obtenu à sensiblement la vitesse de rotation minimale (RSmin) quand l'enroulement statorique (220) du générateur (500) est connecté dans le montage en triangle (Δ), et de telle sorte que le premier flux magnétique (Φ) soit également obtenu à sensiblement la vitesse de rotation maximale (RSmax) quand l'enroulement statorique (220) du générateur (500) est connecté dans le montage en étoile (Y),
   le procédé étant **caractérisé en ce qu'**il comprend :
   l'exploitation du générateur (500) dans le montage en triangle (Δ) à la vitesse de rotation minimale (RSmin) et l'exploitation du générateur (500) dans le montage en étoile (Y) à la vitesse de rotation maximale (RSmax), le rapport entre la vitesse de rotation minimale (RSmin) du générateur (500) et la vitesse de rotation maximale (RSmax) du générateur (500) étant sensiblement 0,60.

2. Procédé selon la revendication 1, comprenant en outre, quand la vitesse de rotation du générateur (500) augmente, le changement de la connexion de l'enroulement statorique (220) du générateur (500) du montage en triangle (Δ) au montage en étoile (Y) dans une deuxième plage de vitesses de rotation (RSR2) allant d'une première valeur limite (RS1) de la vitesse de rotation à la vitesse de rotation maximale (RSmax), la première valeur limite (RS1) de la vitesse de rotation étant inférieure à la vitesse de rotation maximale (RSmax).

3. Procédé selon la revendication 1 ou 2, comprenant en outre, quand la vitesse de rotation du générateur (500) diminue, le changement de la connexion de l'enroulement statorique (220) du générateur (500) du montage en étoile (Y) au montage en triangle (Δ) dans une troisième plage de vitesses de rotation (RSR3) allant de la vitesse de rotation maximale (RSmax) à une seconde valeur limite (RS2) de la vitesse de rotation, la seconde valeur limite (RS2) de la vitesse de rotation étant inférieure à la vitesse de rotation maximale (RSmax).

4. Procédé selon l'une quelconque des revendications 1 à 3, comprenant en outre la sélection de la vitesse de rotation minimale (RSmin) du générateur de force motrice (600) à une valeur de sensiblement 60% de la vitesse de rotation nominale (RSn) du générateur de force motrice (600) .

5. Procédé selon l'une quelconque des revendications 1 à 4, comprenant en outre la sélection de la vitesse de rotation maximale (RSmax) du générateur de force motrice (600) à une valeur de sensiblement 100 % de la vitesse de rotation nominale (RSn) du générateur de force motrice (600) .

6. Procédé selon l'une quelconque des revendications 2 à 5, comprenant en outre la sélection de la première valeur limite (RS1) de la vitesse de rotation et de la seconde valeur limite (RS2) de la vitesse de rotation à une valeur de 85% de la vitesse de rotation maximale (RSmax) du générateur (500).

7. Système d'alimentation électrique comprenant :

   un générateur de force motrice (600) exploitable au moins à une vitesse de rotation minimale (RSmin) et à une vitesse de rotation maximale (RSmax),
   un générateur synchrone C.A. triphasé (L1, L2, L3) (500) comprenant un stator (200) à enroulement statorique (220),
   un agencement de connexion (550) pour connecter l'enroulement statorique (220) du générateur (500) dans un montage en étoile (Y) et dans un montage en triangle (Δ),
   un contrôleur principal (800), dans lequel :

      le générateur (500) est dimensionné électromagnétiquement de telle sorte qu'un premier flux magnétique (Φ) soit obtenu sensiblement à la vitesse de rotation minimale (RSmin) quand l'enroulement statorique (220) du générateur (500) est connecté dans le montage en triangle (Δ), et de telle sorte que le premier flux magnétique (Φ) soit également obtenu sensiblement à la vitesse de rotation maximale (RSmax) quand l'enroulement statorique (220) du générateur (500) est connecté dans le montage en étoile (Y), le système d'alimentation électrique étant **caractérisé en ce que** :

le contrôleur principal (800) est agencé pour exploiter le générateur (500) dans le montage en triangle (Δ) à la vitesse de rotation minimale (RSmin) et dans le montage en étoile (Y) à la vitesse de rotation maximale (RSmax), le rapport entre la vitesse de rotation minimale (RSmin) du générateur (500) et la vitesse de rotation maximale (RSmax) du générateur (500) étant sensiblement 0, 60.

**8.** Système d'alimentation électrique selon la revendication 7, dans lequel, quand la vitesse de rotation du générateur (500) augmente, la connexion de l'enroulement statorique (220) du générateur (500) est changée du montage en triangle (Δ) au montage en étoile (Y) dans une deuxième plage de vitesses de rotation (RSR2) allant d'une première valeur limite (RS1) de la vitesse de rotation à la vitesse de rotation maximale (RSmax), la première valeur limite (RS1) de la vitesse de rotation étant inférieure à la vitesse de rotation maximale (RSmax).

**9.** Système d'alimentation électrique selon la revendication 7 ou 8, dans lequel, quand la vitesse de rotation du générateur (500) diminue, la connexion de l'enroulement statorique (220) du générateur (500) est changée du montage en étoile (Y) au montage en triangle (Δ) dans une troisième plage de vitesses de rotation (RSR3) allant de la vitesse de rotation maximale (RSmax) à une seconde valeur limite (RS2) de la vitesse de rotation, la seconde valeur limite (RS2) de la vitesse de rotation étant inférieure à la vitesse de rotation maximale (RSmax).

**10.** Système d'alimentation selon la revendication 8 ou 9, dans lequel la première valeur limite (RS1) de la vitesse de rotation et la seconde valeur limite (RS2) de la vitesse de rotation sont sélectionnées à une valeur égale à 85% de la vitesse de rotation maximale (RSmax) du générateur (500).

**11.** Système d'alimentation électrique selon l'une quelconque des revendications 7 à 10, dans lequel une première extrémité (223A, 223B, 223C) de chaque phase (L1, L2, L3) de l'enroulement statorique (220) est connectée à un point de connexion respectif dans une première borne de sortie (T1) et une seconde extrémité (224A, 224B, 224C) de chaque phase (L1, L2, L3) de l'enroulement statorique (220) est connectée à un point de connexion respectif dans une seconde borne de sortie (T2), ladite première borne de sortie (T1) et ladite seconde borne de sortie (T2) étant agencées dans un espace de connexion.

**12.** Système d'alimentation électrique selon la revendication 11, dans lequel les points de connexion dans la seconde borne de sortie (T2) sont connectés à des points de connexion respectifs situés sur un premier côté d'un premier commutateur (K1), moyennant quoi chacun des points de connexion situés sur un second côté du premier commutateur (K1) sont court-circuités pour former le point étoile dans le montage en étoile (Y) de l'enroulement statorique (220).

**13.** Système d'alimentation électrique selon la revendication 11 ou 12, dans lequel les points de connexion dans la seconde borne de sortie (T2) sont connectés par l'intermédiaire d'un second commutateur (K2) à des points de connexion respectifs dans la première borne de sortie (T1) de telle sorte que la seconde extrémité (223A) de la première phase (L1) dans l'enroulement statorique (220) soit connectée à la première extrémité de la deuxième phase (L2) dans l'enroulement statorique (200), la seconde extrémité (223B) de la deuxième phase (L2) dans l'enroulement statorique (220) soit connectée à la première extrémité de la troisième (L3) dans l'enroulement statorique (220), et la seconde extrémité (223C) de la troisième phase (L3) dans l'enroulement statorique (220) soit connectée à la première extrémité de la première phase (L1) dans l'enroulement statorique (220), moyennant quoi l'enroulement statorique (220) est alors connecté dans le montage en triangle (Δ).

**Fig. 1**

AC

930

910

940

920

DC

900

K10

800 ↔ 700

AC

500 600

**Fig. 2**

**Fig. 3**

**Fig. 4**

**Fig. 5**

**Fig. 6**

Δ

L1 L2 L3    224C  224B    224A

R3      R2

223C

223B

223A

R1

**Fig. 7**

RSR1

RS2    RS1

RSn

RSmin                    RSmid                    RSmax

N

RSR2

RSR3

**Fig. 8**

**EP 3 472 932 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0225802 A
- US 3737760 A